# EUROPEAN PATENT SPECIFICATION

(11) **EP 0 742 685 B1**
(45) Date of publication and mention of the grant of the patent: **08.07.1998**
(21) Application number: 95911231.9
(22) Date of filing: 10.03.1995
(51) Int. Cl.: A01J 5/02

(54) **A FEEDING DEVICE**
FÜTTERER
DISPOSITIF D'ALIMENTATION

(30) Priority: 11.03.1994 DK 12394
(43) Date of publication of application: 20.11.1996
(73) Proprietor: EGEBJERG MASKINFABRIK AF 1983 A/S, 4500 Nykobing Sjaelland (DK)
(72) Inventor: RASMUSSEN, Henrik, 4500 Nykobing Sjaelland (DK)
(74) Representative: Nielsen, Leif
(86) International application number: DK9500116
(87) International publication number: WO9524120

(56) References cited:
- WO-A-93/13652
- DE-A- 1 632 979
- DE-C- 2 652 788
- FR-A- 2 660 155

## Description

### Background of the invention

The present invention relates to a feeding device for feeding animals, especially hogs and pigs, said feeding device comprising a base designed with a trough over which, on a frame fastened to the base, a tube is suspended, said tube constituting at its upper end a container for storing feed and at its lower end a dispenser unit for dispensing the feed, said tube being suspended and guided at least two members, an upper suspension member and a lower guiding member, the upper suspension member is fixedly mounted on the upper part of the frame and the tube is suspended on the frame in the upper suspension member, said tube is mounted non-adjustable and non-displaceable in the vertical direction in relation to said upper suspension member.

A feeding device for feeding hogs and pigs is known from WO-93/13652. The feeding device comprises a base on which a trough is formed. Mounted on this base is a frame partitioning the trough. On this frame and directly over the centre of the trough a tube is mounted. This tube serves as a feed dispenser at its bottom and as a feed container at its top.

The function of the feeding device is such that the animal, when hungry, presses its snout against the dispenser part in order to displace it. This is possible since the dispensing part is made from an elastic flexible material. The deflection of the tube will result in a larger opening between the trough and the opening of the tube, and feed will be dispensed onto the trough.

However, a feeding device of the above-mentioned type involves disadvantages. Among other things, it has turned out to be difficult to provide an elastic flexible tube for a young pig. Firstly, it is hard to modify the physical properties of the feeding device so as to adapt it optimally to the forces which the animals exert on the tube, i.e. the sizes of the animals. Secondly, the tube will be costly in production since an elastic flexible material is relatively expensive. Thirdly, it is not possible in a simple manner to adjust the amount of feed to be dispensed from the tube.

FR 2,660,155 describes another feeding device also with a flexible tube, mounted inside a rigid tube. The function of the feeding device is, however, similar to the function of the feeding device described above and thus exibits the same disadvantages.

DE 2,652,788 describes a feeding device, which is provided with an annular ring around a stiff tube. The amount of feed that is determined by the angle to which the stiff tube can be pivoted. This angle is determined by the ring, the lower it is put, the smaller the angle the tube can make, the less feed comes out of the tube.

All the feeding devices described controls the amount of food being led to the trough by adjusting the distance between the outlet of the feeding tube and the trough. This adjustment is made by a vertical movement of the feeding tube.

It is the object of the present invention to provide a feeding device which is simple and inexpensive in production, a feeding device wherein it is easy to adjust the dispensed amount of feed, and a feeding device which is adaptable so as to suit the sizes of the animals.

This object is achieved by a feeding device of the kind mentioned in the introduction which is characterized in that the tube is essentially stiff, and that the lower guiding member comprises an elastic, flexible, preferably annular, member so that the lower end of the tube may be displaced horizontally in relation to the trough.

The feeding device according to the present invention is an improved and alternative solution to the problems underlying the above-mentioned feeding device according to WO 93/13652.

With a feeding device of this type it is possible to produce a feeding device
- wherein the tube may be produced from an inexpensive stiff material,
- wherein the adjustment of the desired amount of feed being dispensed is uncomplicated simply by displacing the tube vertically, and
- wherein the adaptation to the sizes of the animals is accomplished in an uncomplicated manner simply by exchanging the elastic flexible annular body.

The above-mentioned features are obtained by suspending the stiff tube, at is upper end, in an annular suspension member, freely rotatably on the frame, and by guiding it underneath said suspension member in the lower flexible elastic guiding member. The desired swing of the tube and the resulting dispensing of feed is obtained in that the inner side of the annular body which contacts the tube comprises an annular flexible elastic material. After a swing and dispensing of feed this causes the tube to become actuated so that it resumes its neutral vertical original position.

The vertical position of the guiding ring on the frame may be varied, and the inside diameter of the guiding ring may be varied, and the elasticity of the elastic flexible material may be varied. This makes it possible for a standard feeding device according to the present invention to be adapted to animals of virtually all sizes. Thus, the feeding device may also be adapted for use by other animals than pigs.

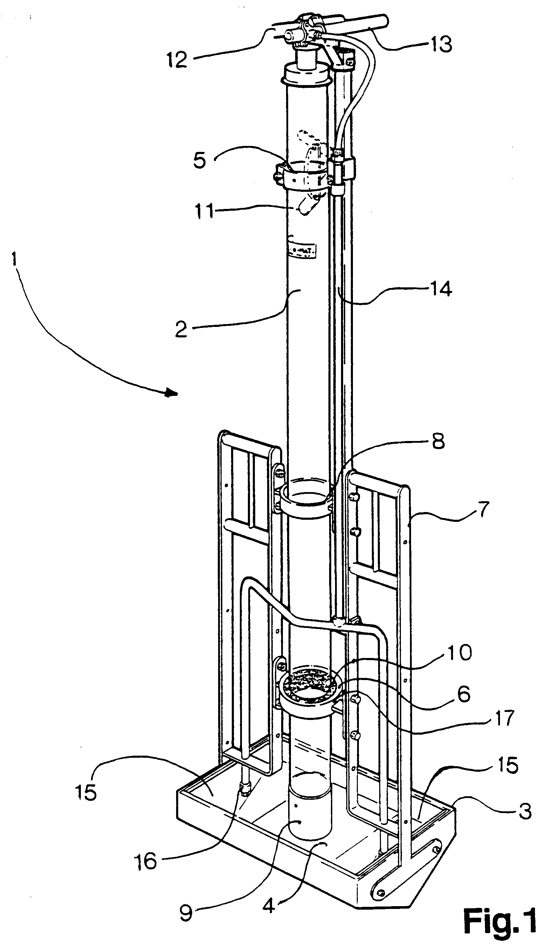

### Description of the drawing

The present invention will be explained in further detail below with reference to the accompanying drawing showing a feeding device according to the present invention.

The drawing shows a feeding device 1 according to the present invention. The feeding device comprises a tube 2 located immediately above a base 3 which is formed with a trough 4. The tube 2 is mounted on a frame 7 by means of two annular members 5 and 6. The upper member is a suspension member 5 mounted freely rotatably on the frame 7. The lower one is a guiding member 6 mounted on the frame 7. The guiding member 6 may be displaced in vertical direction on the frame 7. The member 8 is an assembly member between the two halves of the frame 7. This member may be omitted if the frame 7 is stiff in itself.

The guiding member 6 of the illustrated embodiment consists of a stiff annular circular holder 17 in which an elastic flexible annular body 10 is mounted. By means of a handle 11 the suspension member 5 may be displaced in vertical direction in relation to the frame 7 so as to place the tube in the desired position, i.e. from totally closed (contacting the trough) to its maximal height above the trough 4.

A feeding device of this type is connected at the top of the tube 2 to a pipe 12 for automatic filling of feed and a water pipe 13. The water pipe 13 is connected to a hose 14 fixed to the frame 7. The hose 14 is bifurcated further down the frame 7. Either of these two branches lead into a hollow 15 formed in the base 3. The hollows 15 are provided on either side of the trough 4. At its end the hose 14 is equipped with a nozzle 16 which, when actuated, e.g. by a snout, allows the passage of water.

Inside at its bottom the holder 17 according to a particularly preferred embodiment is provided with an annular recess extending toward the centre of the holder 17. This is advantageous since it is then not necessary to fasten the elastic flexible annular body 10 to the holder 17, e.g. by means of glue. The elastic flexible annular body 10 will thus be easily replaceable if it is desired to use a different body 10 with modified flexibility. This makes it possible easily to adapt the feeding device to animals of different sizes. It is easy to form the body 10 from a rod-shaped flexible body which is folded and placed in the recess of the holder 17.

The holder 17 may further be provided with a bead at its upper edge in order to ensure that the body 10 does not unintendedly slide out of the holder.

This easy access to exchange of the elastic flexible annular body 10 of the guiding member 6 is what ensures that the feeding device may quickly be adapted to different sizes of animals.

Alternatively, the guiding member 6 is made of a ring provided with elastic flexible straps which are fastened to the frame 7. A guiding member of this type will normally be provided with 2, 4 or 6 straps.

## Claims

1. A feeding device (1) for feeding animals, especially hogs and pigs, said feeding device (1) comprising a base (3) designed with a trough (4) over which, on a frame (7) fastened to the base (3), a tube (2) is suspended, said tube (2) constituting at its upper end a container for storing feed and at its lower end a dispenser unit for dispensing the feed, said tube (2) being suspended and guided at least two members (5,6), an upper suspension member (5) and a lower guiding member (6), the upper suspension member (5) is fixedly mounted on the upper part of the frame (7) and the tube (2) is suspended on the frame (7) in the upper suspension member (5), said tube is mounted non-adjustable and non-displaceable in the vertical direction in relation to said upper suspension member, **characterized** in that the tube (2) is essentially stiff, and that the lower guiding member (6) comprises an elastic, flexible, preferably annular, member (10) so that the lower end of the tube (2) may be displaced horizontally in relation to the trough (4).

2. A feeding device according to claim 1, **characterized** in that the tube (2) is provided at its lower end with a protection ring (9) manufactured from a hard material such as steel, iron or the like.

3. A feeding device according to claim 1, **characterized** in that the annular member (10) is formed by a rod-shaped flexible body which has been folded and located in an annular recess in a stiff annular holder (17).

4. A feeding device according to claim 1, **characterized** in that an annular fitting (8) for holding the two halves of the frame (7) together is mounted on the frame (7) over the lower guiding member (6).

5. A feeding device according to claim 1, **characterized** in that a protection ring (9) is mounted detachably on the tube (2).

6. A feeding device according to claim 1, **characterized** in that the tube (2) is manufactured from a hard plastic such as ABS or the like.

7. A feeding device according to claim 1, **characterized** in that the upper container of the tube (2) is funnel-shaped.

8. A feeding device according to claim 1, **characterized** in that the tube (2) may be displaced in vertical direction by a handle (11) in the suspension member (5).

9. A feeding device according to claim 1, **characterized** in that the frame (7) divides the base (3) into two parts and constitutes part of a partition between adjacent sties.

10. A feeding device according to claim 1, **characterized** in that the elastic, flexible body (10) is a ring provided with elastic, flexible straps.

## Patentansprüche

1. Fütterer (1) zum Füttern von Tieren, insbesondere Schweinen und Ferkeln, wobei der Fütterer (1) eine Basis (3) aufweist, die mit einem Trog (4) ausgebildet ist, über dem auf einem Rahmen (7), der an der Basis (3) befestigt ist, eine Röhre (2) aufgehängt ist, wobei die Röhre (2) an ihrem oberen Ende einen Behälter zum Speichern von Futter und an ihrem unteren Ende eine Spendereinheit zum Spenden des Futters bildet, wobei die Röhre (2) durch mindestens zwei Glieder (5, 6), einem oberen Aufhängungsglied (5) und einem unteren Führungsglied (6), aufgehängt und geführt ist, wobei das obere Aufhängungsglied (5) starr am oberen Teil des Rahmens (7) angebracht ist und die Röhre (2) auf dem Rahmen (7) im oberen Aufhängungsglied (5) aufgehängt ist, wobei die Röhre in Vertikalrichtung in bezug auf das Aufhängungsglied nicht einstellbar und nicht verschiebbar angebracht ist, dadurch gekennzeichnet, daß die Röhre (2) im wesentlichen steif ist und daß das untere Führungsglied (6) ein elastisches, flexibles, vorzugsweise ringförmiges Glied (10) aufweist, so daß das untere Ende der Röhre (2) in bezug auf den Trog (4) horizontal verschoben werden kann.

2. Fütterer nach Anspruch 1, dadurch gekennzeichnet, daß die Röhre (2) an ihrem unteren Ende mit einem Schutzring (9) ausgestattet ist, der aus einem harten Material, wie z.B. Stahl, Eisen oder dergleichen, hergestellt ist.

3. Fütterer nach Anspruch 1, dadurch gekennzeichnet, daß das ringförmige Glied (10) von einem stabförmigen, flexiblen Körper gebildet wird, der gefaltet ist und in einer ringförmigen Ausnehmung in einer steifen, ringförmigen Halterung (17) angeordnet ist.

4. Fütterer nach Anspruch 1, dadurch gekennzeichnet, daß ein ringförmiger Fitting (8) zum Zusammenhalten der beiden Hälften des Rahmens (7) auf dem Rahmen (7) über dem unteren Führungsglied (6) angebracht ist.

5. Fütterer nach Anspruch 1, dadurch gekennzeichnet, daß ein Schutzring (9) abnehmbar auf der Röhre (2) angebracht ist.

6. Fütterer nach Anspruch 1, dadurch gekennzeichnet, daß die Röhre (2) aus einem harten Kunststoff, wie z.B. ABS oder dergleichen, hergestellt ist.

7. Fütterer nach Anspruch 1, dadurch gekennzeichnet, daß der obere Behälter der Röhre (2) trichterförmig ist.

8. Fütterer nach Anspruch 1, dadurch gekennzeichnet, daß die Röhre (2) durch einen Handgriff (11) im Aufhängungsglied (5) in Vertikalrichtung verschoben werden kann.

9. Fütterer nach Anspruch 1, dadurch gekennzeichnet, daß der Rahmen (7) die Basis (3) in zwei Teile teilt und einen Teil der Abgrenzung zwischen benachbarten Schweineställen bildet.

10. Fütterer nach Anspruch 1, dadurch gekennzeichnet, daß der elastische, flexible Körper (10) ein Ring ist, der mit elastischen, flexiblen Riemen ausgestattet ist.

## Revendications

1. Dispositif d'alimentation (1) pour l'alimentation d'animaux, en particulier des porcelets et cochons, ledit dispositif d'alimentation (1) comprenant une base (3) agencée avec une auge (4) au-dessus de laquelle, sur un châssis (7) fixé à la base (3), un tube (2) est suspendu, ledit tube (2) constituant à son extrémité supérieure un récipient pour le stockage de la nourriture et, à son extrémité inférieure, un appareil distributeur pour distribuer la nourriture, ledit tube (2) étant suspendu et guidé par au moins deux éléments (5, 6), un élément de suspension supérieur (5) et un élément de guidage inférieur (6), l'élément de suspension supérieur (6) est monté de façon fixe sur la partie supérieure du châssis (7) et le tube (2) est suspendu sur le châssis (7) dans l'élément de suspension supérieur (5), ledit tube est monté de façon non réglable et non mobile dans la direction verticale par rapport audit élément de suspension supérieur, caractérisé en ce que le tube (2) est essentiellement rigide, et en ce que l'élément de guidage inférieur (6) comprend un élément (10) flexible et élastique, de préférence annulaire, de telle sorte que l'extrémité inférieure du tube (2) peut être déplacée horizontalement en relation avec l'auge (4).

2. Dispositif d'alimentation selon la revendication 1, caractérisé en ce que le tube (2) est muni à son extrémité inférieure d'un anneau de protection (9) fabriqué à partir d'un matériau dur tel que de l'acier, du fer ou analogue.

3. Dispositif d'alimentation selon la revendication 1, caractérisé en ce que l'élément annulaire (10) est formé par un corps flexible en forme de tige qui a été plié et placé dans un évidement annulaire dans un support annulaire (17) rigide.

4. Dispositif d'alimentation selon la revendication 1, caractérisé en ce qu'un élément d'assemblage annulaire (8) pour maintenir ensemble les deux moitiés du châssis (7) est monté sur le châssis (7) au-dessus de l'élément de guidage inférieur (6).

5. Dispositif d'alimentation selon la revendication 1, caractérisé en ce qu'un anneau de protection (9) est monté de façon amovible sur le tube (2).

6. Dispositif d'alimentation selon la revendication 1, caractérisé en ce que le tube (2) est fabriqué à partir d'un plastique dur tel que l'ABS ou analogue.

7. Dispositif d'alimentation selon la revendication 1, caractérisé en ce que le récipient supérieur du tube (2) est en forme d'entonnoir.

8. Dispositif d'alimentation selon la revendication 1, caractérisé en ce que le tube (2) peut être déplacé dans une direction verticale par une manette (11) dans l'élément de suspension (5).

9. Dispositif d'alimentation selon la revendication 1, caractérisé en ce que le châssis (7) divise la base (3) en deux parties et constitue une partie d'une séparation entre des étables adjacentes.

10. Dispositif d'alimentation selon la revendication 1, caractérisé en ce que le corps (10) flexible et élastique est un anneau muni de courroies flexibles et élastiques.
